Europäisches Patentamt

European Patent Office

Office européen des brevets

(19)

(11) Numéro de publication: **0 218 490**
**B1**

(12) # FASCICULE DE BREVET EUROPEEN

(45) Date de publication du fascicule du brevet:
28.12.88

(51) Int. Cl.⁴: **B 60 T 13/24**

(21) Numéro de dépôt: **86401815.5**

(22) Date de dépôt: **14.08.86**

(54) Servomoteur à dépression d'assistance au freinage.

(30) Priorité: **19.09.85 FR 8513905**

(43) Date de publication de la demande:
**15.04.87 Bulletin 87/16**

(45) Mention de la délivrance du brevet:
**28.12.88 Bulletin 88/52**

(84) Etats contractants désignés:
**DE GB IT**

(56) Documents cités:
**EP-A- 0 158 552**
**US-A- 3 093 119**
**US-A- 4 453 380**

(73) Titulaire: **BENDIX France, 126, rue de Stalingrad,**
**F-93700 Drancy (FR)**

(72) Inventeur: **Thioux, Alain, 9, Allée des Bordes,**
**F-94430 Chennevieres (FR)**

(74) Mandataire: **Lejet, Christian et al, Division Technique**
**Service Brevets BENDIX Europe 126, rue de Stalingrad,**
**F-93700 Drancy (FR)**

ACTORUM AG

## Description

La présente invention concerne les servomoteurs à dépression d'assistance au frainage, plus particulièrement pour véhicules automobiles, du type comprenant, dans un boîtier, un ensemble de piston divisant intérieurement le boîtier en une chambre de dépression, ou chambre avant, et une chambre de travail, ou chambre arrière, et comportant un moyeu de piston tubulaire renfermant un moyen de valve de distribution actionnable par une tige d'entrée du servomoteur, le moyeu de piston étant guidé à coulissement étanche dans une structure tubulaire solidaire du boîtier par un ensemble d'une bague de guidage et d'un joint coulissant isolant la chambre de travail de l'atmosphère.

Un servomoteur de ce type est décrit dans les documents US-A-4 453 380 et EP-A-0 158 552, tous deux au nom de la Demanderesse. Dans les servomoteurs de ces documents, l'ensemble de la bague de guidage et du joint coulissant sont montés classiquement dans une cheminée de la coquille arrière du boîtier de servomoteur et coopèrent avec la surface extérieure de la partie arrière du moyeu de piston qui doit être en conséquence réalisée avec précision et qui fait saillie d'une distance relativement importante vers l'arrière du boîtier de servomoteur suivant un agencement imposant un dimensionnement hors tout important pour le servomoteur et nécessitant une protection supplémentaire, généralement par soufflet, de la zone de coulissement externe de la partie arrière du moyeu de servomoteur.

La présente invention a pour objet de proposer un servomoteur du type susmentionné, de faible coûts de fabrication et de montage, de configuration ramassée et permettant de nombreuses adaptations.

Pour ce faire, selon l'invention, l'ensemble de la bague de guidage et du joint coulissant est monté fixe sur le moyeu de piston et la structure tubulaire, constituée avantageusement d'une pièce tubulaire montée de façon étanche dans une cheminée centrale du boîtier, comporte une première partie d'extrémité s'étendant axialement en saillie dans la chambre de travail vers l'intérieur du boîtier.

Avec un tel agencement, la surface de coulissement, reportée sur la structure tubulaire, est entièrement intégrée dans le servomoteur, ce qui évite en outre de devoir recourir à des moyens de protection spécifiques additionnels, et le moyeu de piston, raccourci, peut être réalisé, au moins extérieurement, avec une précision moins rigoureuse.

Le document EP-A-0 158 552 susmentionnée décrit un agencement de servomoteur à course morte nulle dans lequel un organe de butée, associé à la tige d'entrée, coopère en appui avec une butée fixe solidaire du boîtier et constituée typiquement par un capot rapporté sur la cheminée de la coquille arrière de ce dernier.

L'agencement selon l'invention, tel que défini ci-dessus, permet une adaptation aisée convenant à cet agencement de servomoteur à course morte nulle.

C'est pourquoi la présente invention a pour autre objet de proposer un servomoteur du type susmentionné adatpé pour présenter une course morte nulle, la structure de piston et le moyen de valve adoptant automatiquement des positions de repos relatives auto-adaptatives.

Pour ce faire, selon une autre caractéristique de l'invention, la structure tubulaire comporte une seconde partie d'extrémité, opposée à la première partie d'extrémité et formant butée pour un organe de butée associé à la tige d'entrée.

D'autres caractéristiques et avantages de la présente invention ressortiront de la description suivante d'un mode de réalisation, donné à titre illustratif mais nullement limitatif, faite en relation avec le dessin annexé, sur lequel:

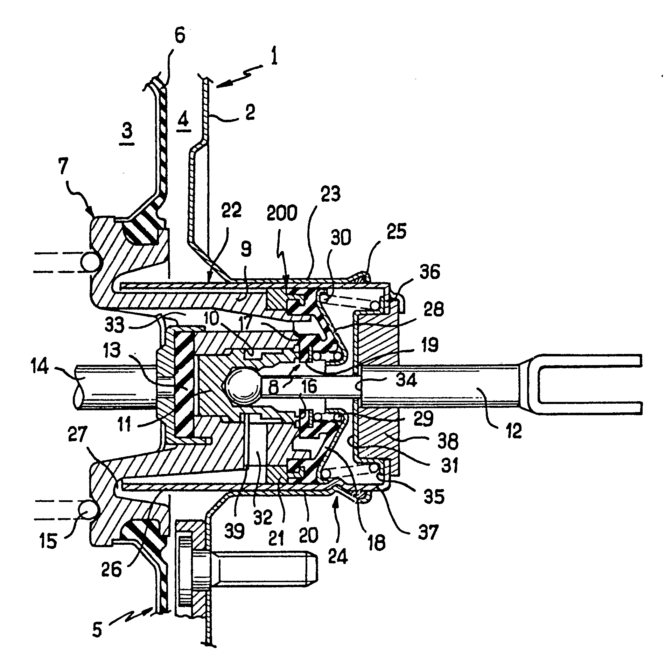

la figure 1 est une vue en coupe longitudinale partielle d'un servomoteur d'assistance au freinage selon l'invention.

Le servomoteur à dépression d'assistance au freinage selon l'invention comprend typiquement un boîtier, désigné généralement par la référence 1, constitué par l'assemblage périphérique étanche d'une coquille de boîtier avant (non représentée) et d'une coquille de boîtier arrière 2 dont on reconnaît la partie centrale sur la figure. Le boîtier 1 est divisé intérieurement en une chambre avant ou chambre à dépression 3, destinée à être reliée à une source de vide, par exemple le collecteur d'admission du moteur d'un véhicule automobile, et une chambre arrière ou chambre de travail 4 par une structure de piston, désignée généralement par la référence 5 et constituée d'un ensemble annulaire à diaphragme 6 pincé périphériquement entre les deux coquilles du boîtier et monté centralement sur un moyeu de piston désigné généralement par la référence 7, renfermant un moyen de valve de distribution, désigné généralement par la référence 8, comme on le verra plus avant. Le moyeu 7 comporte une partie arrière de configuration tubulaire 9 comportant un alésage central 10 dans lequel est monté à coulissement un plongeur de valve 11 couplé à l'extrémité d'une tige d'entrée 12 destinée typiquement à être reliée à une pédale de frein d'un véhicule (non représentée), le moyeu 7 supportant également, avec interposition d'un disque de réaction élastique 13, une tige de sortie 14, destinée à être couplée à un piston d'un maître-cylindre (non représenté) associé au servomoteur d'assistance au freinage, le moyeu 7 étant sollicité dans la direction vers la coquille arrière 2 du boîtier 1 par un ressort 15 disposé dans la chambre de dépression avant 3 du servomoteur. L'extrémité arrière du plongeur 11 forme un premier siège de clapet 16, un second siège de clapet 17 étant formé dans la partie centrale du moyeu 9 concentriquement autour du premier siège de clapet 16. Le moyen de valve 8 comprend un élément de clapet 18 en matériau élastomère comportant une partie active centrale renforcée 19 agencée de façon à coopérer sélectivement avec les sièges de clapet 16 et 17. Cette partie active de clapet 19 est reliée, par une partie de voile s'étendant obliquement vers l'extérieur, à une partie de montage de clapet en forme de bourrelet périphérique 20.

Conformément à l'invention, la partie de montage de clapet 20 est associée, dans un montage à engagement mutuel, avec une bague de guidage rigide 21, cette dernière et le bourrelet formant partie de montage 20 du clapet 18 étant montés dans un logement étagé périphérique formé à l'extrémité arrière libre de la partie tubulaire 9 du moyeu 7 de façon à constituer un ensemble de guidage et d'étanchéité 200 présentant une zone périphérique annulaire destinée à coopérer en guidage à coulissement étanche avec la paroi interne d'une pièce tubulaire axiale 22 montée dans une courte cheminée centrale arrière 23 s'étendant vers l'extérieur de la coquille arrière 2 du boîtier 1. Comme on le voit bien sur la figure, la pièce tubulaire 22, de diamètre intérieur constant, est solidarisée dans la position requise à la cheminée 23, par sertissage, comme indiqué en 24, un joint d'étanchéite 25 étant interposé entre l'extrémité arrière de la cheminée 23 et la pièce tubulaire 22. Cette dernière est positionnée dans la cheminée 23 de façon à présenter une première partie d'extrémité 26 s'étendant axialement vers l'intérieur du boîtier 1 dans la chambre de travail arrière 4 dans la direction vers la partie avant du moyeu 7 lequel est avantageusement formé avec un évidement annulaire 27 de façon à ne pas interférer avec l'extrémité intérieure de la première partie d'extrémité 26 de la pièce tubulaire 22 dont la dimension axiale est déterminée en fonction de la course nominale de l'ensemble de piston 5. A l'élément de clapet 18 est associé un support en tôle 28 à section en forme de S avec un arrondi intérieur formant appui pour un ressort 29 sollicitant la partie active 19 de l'élément de clapet 18 dans la direction vers le sièges de clapet 16 et 17, et un arrondi extérieur formant appui pour un ressort de rappel de tige 30 prenant son autre appui sur un moyen de collerette 31 associé à la tige d'entrée 12, la force du ressort de rappel 30 garantissant le maintien en position de l'ensemble 200 dans le logement étagé de la partie tubulaire 9 du moyeu 7. On comprendra que, de façon classique, la partie active 19 de l'élément de clapet 18 commande, en fonction de sa coopération avec les sièges 16 et 17, la communication, via un passage radial 32 dans la partie tubulaire 9 du moyeu 7, entre la chambre de travail arrière 4 et l'atmosphère où, via un passage d'air longitudinal 33 dans le moyeu 7, avec la chambre de dépression avant 3.

Dans l'agencement qui vient d'être décrit, le moyen de collerette 31 peut être solidarisé à la tige 12. Toutefois, dans un mode de réalisation préféré de l'invention, comme représenté est conformément à l'enseignement du document EP-A-0 158 552 susmentionné, dont le contenu est supposé intégré ici pour référence, le moyen de collerette 31 est monté coulissant sur la tige 12 en étant toutefois susceptible de coopérer centralement avec un épaulement 34 dirigé vers l'avant de la tige 12 et, périphériquement, par un rebord annulaire 35, avec une butée fixe solidaire du boîtier 1. Conformément à un aspect de l'invention, cette butée fixe est constituée par une collerette ou des doigts 36 rabattus radialement vers l'intérieur d'une seconde partie d'extrémité 37 de la pièce tubulaire 22 s'étendant axialement légèrement en saillie hors de la cheminée 23, le fonctionnement du servomoteur suivant cet agencement étant dès lors en tout point identique à celui décrit dans le document EP-A-0 158 552 susmentionné. Pour diminuer encore l'encombrement axial hors-tout du servomoteur, le rebord annulaire extérieur 35 du moyen de collerette 31 est décalé axialement vers l'extérieur de la zone de voile principale centrale du moyen de collerette 31 destinée à coopérer avec l'épaulement 34 de la tige 12, le moyen de collerette 31 recevant en outre au moins une partie d'un filtre d'air annulaire 38 traversé par la tige d'entrée 12 et monté sur la partie d'extrémité 37 de la pièce tubulaire. Pour garantir une résistance accrue lors de tests dit «d'arrachement», une clé 39 peut être montée dans le passage d'air radial 32 pour coopérer avec un épaulement périphérique du plongeur 11.

## Revendications

1. Servomoteur d'assistance au freinage, comprenant, dans un boîtier (1), un ensemble de piston (5) divisant intérieurement le boîtier en une chambre de dépression (3) et une chambre de travail (4) et comportant un moyeu de piston tubulaire (9) renfermant un moyen de valve de distribution (8) actionnable par une tige d'entrée (12), le moyeu tubulaire (9) étant guidé à coulissement étanche dans une structure tubulaire (22) solidaire du boîtier (1) par un ensemble (200) d'une bague de guidage (21) et d'un joint coulissant (20) isolant la chambre de travail (4) de l'atmosphère, caractérisé en ce que l'ensemble (200) de la bague de guidage (21) et du joint coulissant (20) est monté fixe sur le moyeu tubulaire (9) et en ce que la structure tubulaire (22) comporte une première partie d'extrémité (26) s'étendant en saillie dans la chambre de travail (4) vers l'intérieur du boîtier (1).

2. Servomoteur selon la revendication 1, caractérisé en ce que la structure tubulaire (22) est constituée d'une pièce tubulaire (22) montée de façon étanche (25) dans une cheminée centrale (23) du boîtier (1).

3. Servomoteur selon la revendication 2, caractérisé en ce que la pièce tubulaire (22) et la cheminée (23) sont solidarisée l'une à l'autre par sertissage mutuel (24).

4. Servomoteur selon l'une des revendications précédentes, caractérisé en ce que l'ensemble (200) de la bague de guidage (21) et du joint coulissant (20) est monté sur l'extrémité libre du moyeu tubulaire (9).

5. Servomoteur selon la revendication 4, caractérisé en ce que le moyen de valve de distribution (8) comprend un élément de clapet élastique (18) coopérant sélectivement avec deux sièges de clapet concentriques (17, 16) formés respectivement dans le moyeu tubulaire (9) et sur un plongeur de valve (11) couplé à la tige d'entrée (12), le joint coulissant d'étanchéité (20) étant formé par une extrémité extérieure annulaire de l'élément du clapet (18).

6. Servomoteur selon l'une des revendications précédentes, caractérisé en ce que la structure tubulaire (22) comporte une seconde partie d'extrémité (37) opposé à la première partie d'extrémité (26) et formant butée (36) pour un organe de butée (31) associé à la tige d'entrée (12).

7. Servomoteur selon la revendication 3 et la revendication 6, caractérisé en ce que la seconde partie d'extrémité (37) est formée par une extrémité de la pièce tubulaire (22) s'étendant vers l'extérieur hors de la cheminée centrale (23) du boîtier (1).

8. Servomoteur selon la revendication 6 ou la revendication 7, caractérisé en ce que l'organe de butée (31) est monté coulissant sur la tige d'entrée (12) et est susceptible de coopérer sélectivement en engagement avec un épaulement (34) de la tige d'entrée (12).

9. Servomoteur selon la revendication 8, caractérisé en ce que l'organe de butée (31) forme appui pour un ressort de rappel (30) de la tige d'entrée (12) son autre appui sur l'ensemble (200) de la bague de guidage (21) et du joint coulissant (20).

10. Servomoteur selon la revendication 9, caractérisé en ce que le ressort de rappel (30) prend son autre appui sur un support profilé (28) associé à l'élément de clapet (18) du moyen de valve de distribution (8).

## Patentansprüche

1. Servomotor für eine Bremse, mit einer in einem Gehäuse (1) vorgesehenen Kolbenanordnung (5), die das Gehäuseinnere in eine Unterdruckkammer (3) und eine Arbeitskammer (4) unterteilt und eine rohrförmige Kolbennabe (9) aufweist, die eine durch eine Betätigungsstange (12) betätigbare Verteilerventileinrichtung (8) umschliesst, wobei die rohrförmige Nabe (9) abgedichtet gleitend in einem rohrförmigen Aufbau (22) geführt ist, der mit dem Gehäuse (1) durch eine Anordnung (200) aus einem Führungsring (21) und einer Berührungsdichtung (20) fest verbunden ist, welche die Arbeitskammer (4) gegen die Atmosphäre abdichtet, dadurch gekennzeichnet, dass die Anordnung (200) aus Führungsring (21) und Berührungsdichtung (20) an der rohrförmigen Nabe (9) fest angebracht ist und dass der rohrförmige Aufbau (22) einen ersten Endabschnitt (26) aufweist, der in die Arbeitskammer (4) in Richtung auf das Innere des Gehäuses (1) vorsteht.

2. Servomotor nach Anspruch 1, dadurch gekennzeichnet, dass der rohrförmige Aufbau (22) von einem Rohrstück (22) gebildet wird, das in einem zentralen Mantel (23) des Gehäuses (1) abgedichtet (25) angebracht ist.

3. Servomotor nach Anspruch 2, dadurch gekennzeichnet, dass das Rohrstück (22) und der Mantel (23) durch eine gegenseitige Versickung (24) miteinander verbunden sind.

4. Servomotor nach einem der vorhergehenden Ansprüche, dadurch gekennzeichnet, dass die Anordnung (200) aus Führungsring (21) und Berührungsdichtung (20) am freien Ende der rohrförmigen Nabe (9) angebracht ist.

5. Servomotor nach Anspruch 4, dadurch gekennzeichnet, dass die Verteilerventileinrichtung (8) ein elastisches Verschlussteil (18) aufweist, das wahlweise mit zwei konzentrischen Ventilsitzen (17, 16) zusammenwirkt, die in der rohrförmigen Nabe (9) bzw. an einem mit der Betätigungsstange (12) verbundenen Ventilkolben (11) gebildet ist, wobei die Berührungsdichtung (20) von einem rohrförmigen äusseren Ende des Verschlussteiles (18) gebildet wird.

6. Servomotor nach einem der vorhergehenden Ansprüche, dadurch gekennzeichnet, dass der rohrförmige Aufbau (22) einen zweiten Endabschnitt (37) aufweist, der dem ersten Endabschnitt (26) gegenüberliegt und einen Anschlag (36) für ein Anschlagteil (31) bildet, das der Betätigungsstange (12) zugeordnet ist.

7. Servomotor nach Anspruch 3 und 4, dadurch gekennzeichnet, dass der zweite Endabschnitt (37) von einem Rohrstück (22) gebildet wird, das sich nach aussen über den zentralen Mantel (23) des Gehäuses (1) hinaus erstreckt.

8. Servomotor nach Anspruch 6 oder 7, dadurch gekennzeichnet, dass das Anschlagteil (31) gleitend auf der Betätigungsstange (12) gelagert ist und wahlweise anlagemässig mit einer Schulter (34) der Betätigungsstange (12) zusammenwirkt.

9. Servomotor nach Anspruch 8, dadurch gekennzeichnet, dass das Anschlagteil (31) eine Anlage für eine Rückholfeder (30) der Betätigungsstange (12) bildet, deren andere Anlage an der Anordnung (200) aus Führungsring (21) und Berührungsdichtung (20) vorgesehen ist.

10. Servomotor nach Anspruch 9, dadurch gekennzeichnet, dass die andere Anlage der Rückholfeder (30) an einer profilierten Abstützung (28) vorgesehen ist, die dem Verschlussteil (18) der Verteilerventileinrichtung (8) zugeordnet ist.

## Claims

1. Servomotor for assisted braking, comprising, inside a housing (1), a piston assembly (5) dividing the housing internally into a vacuum chamber (3) and a working chamber (4) and comprising a tubular piston hub (9) enclosing a distribution valve means (8) actuable by an input rod (12), the tubular hub (9) being sealingly and slidingly guided, inside a tubular structure (22) integral with the housing (1), by an assembly (200) consisting of a guiding ring (21) and a sliding seal (20) isolating the working chamber (4) from the atmosphere, characterized in that the assembly (200) consisting of the guiding ring (21) and the sliding seal (20) is fixed to the tubular hub (9) and in that the tubular structure (22) has a first end part (26) extending so as to project into the working chamber (4) towards the inside of the housing (1).

2. Servomotor according to Claim 1, characterized in that the tubular structure (22) consists of a tubular part (22) mounted in sealed fashion (25) inside a central tubular position (23) of the housing (1).

3. Servomotor according to Claim 2, characterized in that the tubular part (22) and the tubular position (23) are rigidly fixed to each other by mutual crimping (24).

4. Servomotor according to one of the preceding claims, characterized in that the assembly (200) consisting of the guiding ring (21) and the sliding seal (20) is mounted on the free end of the tubular hub (9).

5. Servomotor according to Claim 4, characterized in that the distribution valve means (8) comprises an elastic valve member (18) co-operating selectively with two concentric valve seats (17, 16) formed in the tubular hub (9) and on a valve plunger (11) coupled to the input rod (12), respectively, the sliding seal (20) being formed by an annular external end of the valve member (18).

6. Servomotor according to one of the preceding claims, characterized in that the tubular structure (22) has a second end part (37) which is located opposite the first end part (26) and forms a stop (36) for a limit member (31) associated with the input rod (12).

7. Servomotor according to Claim 3 and Claim 6, characterized in that the second end part (37) is formed by an end of the tubular part (22) extending outwards outside the central tubular position (23) of the housing (1).

8. Servomotor according to Claim 6 or 7, characterized in that the limit member (31) is slidingly mounted on the input rod (12) and is capable of engaging selectively with a shoulder (34) of the input rod (12).

9. Servomotor according to Claim 8, characterized in that the limit member (31) forms a bearing for a return spring (30) of the input rod (12), also bearing against the assembly (200) consisting of the guiding ring (21) and the sliding seal (20).

10. Servomotor according to Claim 9, characterized in that the return spring (30) also bears against a profiled support (28) associated with the valve member (18) of the distribution valve means (8).